# EUROPEAN PATENT APPLICATION

(11) **EP 1 921 047 A1**
(43) Date of publication of application: **14.05.2008**
(21) Application number: 06796901.4
(22) Date of filing: 29.08.2006
(51) Int. Cl.: C03B 8/04, C03B 37/014, C03B 37/018

(54) **PROCESS FOR PRODUCING GLASS MATERIAL AND PROCESS FOR PRODUCING OPTICAL FIBER**

(30) Priority: 01.09.2005 JP 2005253893
(71) Applicant: Sumitomo Electric Industries, Ltd., Osaka-shi, Osaka 541-0041 (JP)
(72) Inventor: HARUNA, Tetsuya, 1 Taya-cho, Sakae-ku, Yokohama-shi Kanagawa (JP); TARU, Toshiki, 1 Taya-cho, Sakae-ku, Yokohama-shi Kanagawa (JP); KAKUI, Motoki, 1 Taya-cho, Sakae-ku, Yokohama-shi Kanagawa (JP); ONISHI, Masashi, 1 Taya-cho, Sakae-ku, Yokohama-shi Kanagawa (JP)
(74) Representative: HOFFMANN EITLE
(86) International application number: PCT/JP2006/316921
(87) International publication number: WO 2007/029555

(57) **Abstract**

This invention provides a method for manufacturing a glass body containing bismuth, which can be used for manufacturing an optical fiber having a low background-loss, and provides a method for manufacturing an optical fiber including the method for manufacturing the glass body. This method for manufacturing the glass body includes a step of depositing a glass micro-particle layer on an inner wall of a glass pipe, a step of consolidating the glass micro-particle layer to form a glass layer, a step of reducing of a diameter of the glass pipe having the glass layer on the inner wall of the glass pipe, and a step of collapsing the glass pipe having been reduced in diameter at the diameter-reducing step so as to form the glass body. At the step of depositing, the glass micro-particle layer is formed while an organobismuth compound is being supplied into the glass pipe. At the step of consolidating, the glass layer is consolidated while an organobismuth compound is being supplied into the glass pipe. The method for manufacturing an optical fiber includes a step of drawing a glass body manufactured by the method for manufacturing a glass body of the present invention.

## Description

### Technical Field

The present invention relates to a method for manufacturing a glass body containing bismuth, which is suitable for an optical fiber preform, and relates to a method for manufacturing an optical fiber including the method for manufacturing the glass body.

### Background Art

It is known that a bismuth-doped silica glass has a broad fluorescence spectrum having a peak wavelength at 1250 nm and a half-width of about 300 nm, for example. Such glass is expected to be applied for an amplification fiber used for a 1300 nm waveband application.

As a method for manufacturing a bismuth-doped glass, a method using a sol-gel process (e.g., Y. Fujimoto and M. Nakatsuka: Jpn. J. Appl. Phys. Vol. 40 (2001) pp. L279-L281, and Japanese Unexamined Patent Application Publication No. 11-29334) and a melt quenching process (i.e., a method for obtaining a glass by mixing powder materials, melting the materials in a crucible, and rapidly cooling the materials (e.g., Japanese Unexamined Patent Application Publication No. 2002-252397)) are known. However, when the glass is manufactured by the sol-gel process or the melt quenching process, impurities are introduced in the glass during bismuth doping of the glass. Therefore, it is difficult to manufacture a glass body suitable for an optical fiber preform. If an optical fiber is made of this glass body, the optical fiber cannot be used as an amplification fiber because of a high background loss of the optical fiber.

The modified chemical vapor deposition (MCVD) method is known as a method for manufacturing an optical fiber having a low background loss. When the MCVD method is applied, a metal-element-doped optical fiber is manufactured as follows. First, a SiO₂ micro-particle soot layer (glass micro-particle layer) is formed on an inner wall of a glass pipe, the SiO₂ micro-particle soot layer is impregnated with a solution containing a metal element, and the SiO₂ micro-particle soot layer is consolidated to form a glass layer. Next, the glass pipe including the glass layer is reduced in diameter and collapsed to form an optical fiber preform and the optical fiber preform is drawn so as to form a metal-element-doped optical fiber.
Non-Patent Document 1: Y. Fujimoto and M. Nakatsuka: Jpn. J. Appl. Phys. Vol. 40 (2001) pp. L279-L281
Patent Document 1: Japanese Unexamined Patent Application Publication 11-29334
Patent Document 2: Japanese Unexamined Patent Application Publication 2002-252397

### Disclosure of Invention

### Problems to be Solved by the Invention

The object of the present invention is to provide a method for manufacturing a glass body containing bismuth, which is suitable for use in manufacturing an optical fiber with a low background loss, and a method for manufacturing an optical fiber including the method for manufacturing the glass body.

### Means for Solving the Problems

To solve the problems, there is provided a method for manufacturing a glass body including the steps of (1) depositing a glass micro-particle layer on an inner wall of a glass pipe; (2) consolidating the glass micro-particle layer to form a glass layer; (3) diameter-reducing the glass pipe having the glass layer on the inner wall of the glass pipe; and (4) collapsing the glass pipe having been reduced in diameter at the diameter-reducing step so as to form the glass body. In the method, at the depositing step, the glass micro-particle layer is formed while an organobismuth compound is being supplied into the glass pipe, and at the consolidation step, the glass layer is consolidated while an organobismuth compound is being supplied into the glass pipe.

At the depositing step, the glass pipe may be heated in the temperature range between 900°C and 1300°C, while at the consolidation step, the glass pipe may be heated in the temperature range between 1250°C and 1500°C. (In the present specification, "the temperature of the glass pipe" means the temperature measured at the outer surface of the glass pipe, unless otherwise stated.) At the diameter-reducing step, diameter reduction may be performed while an organobismuth compound is supplied into the glass pipe. As the organobismuth compound, tri-tert-amyloxybismuth (Bi(OtAm)₃, which may also be expressed as Bi(O-t-C₅H₁₁)₃) may be used. As the glass body, an optical fiber preform or an intermediate thereof, both having silica glass as a host material, may be provided.

According to another aspect, there is provided a method for manufacturing an optical fiber, the method including the step of drawing the glass body that is manufactured according to the method for manufacturing the glass body of the present invention.

### Advantages

According to the method for manufacturing the glass body of the present invention, a glass body containing bismuth and being usable for manufacturing an optical fiber with a low background loss can be manufactured. Also, according to the method for manufacturing the optical fiber of the present invention, an optical fiber that can be used as an amplification optical fiber that operates in the 1300 nm waveband can be obtained since background loss can be lowered and a desired amount of bismuth can be doped.

### Brief Description of the Drawings

Figure 1 is a flowchart showing a method for manufacturing a glass body according to an embodiment of the present invention.
Figure 2 is a schematic view illustrating each step of the flowchart shown in Fig. 1.
Figure 3 is a schematic view illustrating a drawing step for forming an optical fiber from the glass body.
Figure 4 is a refractive index profile of the optical fiber.
Figure 5 is a graph showing a relationship between the amount of bismuth contained in the glass body and the temperature of a glass pipe at a depositing step.
Figure 6 is a graph showing a relationship between the amount of bismuth contained in the glass body and the temperature of the glass pipe at a consolidation step.
Figure 7 is a graph showing a wavelength dependence of a background loss of the optical fiber manufactured in EXAMPLE 2.

### Explanation of Reference Numerals

| | | | |
|---|---|---|---|
| 10: | glass pipe, | 10a: | inner wall, |
| 10b: | outer surface, | 20: | oxyhydrogen burner, |
| 31: | glass micro-particle layer, | 32: | glass layer, |
| 33: | glass body, | 34: | optical fiber |

### Best Mode for Carrying Out the Invention

An embodiment of the present invention is described with reference to drawings as follows. The drawings intend to describe an embodiment and do not limit the scope of the present invention. In the drawings, the same reference numerals will be used to denote the same components to avoid redundant description. Elements shown in the drawings have not necessarily been drawn to scale. In the following description, an optical fiber preform, as a glass body, including silica glass as a host material is manufactured.

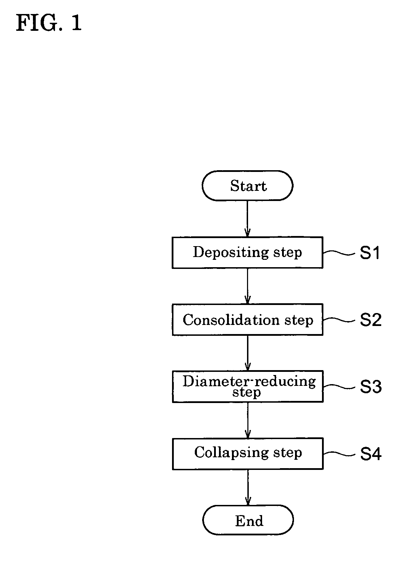

Figure 1 is a flowchart showing a method for manufacturing a glass body according to an embodiment of the present invention. In this method, the MCVD method is applied to manufacture a glass body and this method includes a depositing step S1, a consolidation step S2, a diameter-reducing step S3, and a collapsing step S4. In the method, each of the depositing step S1 and the consolidation step S2 are repeated two times and then the diameter-reducing step S3 and the collapsing step S4 are conducted in this order so as to form a glass body. Each of the steps is described below.

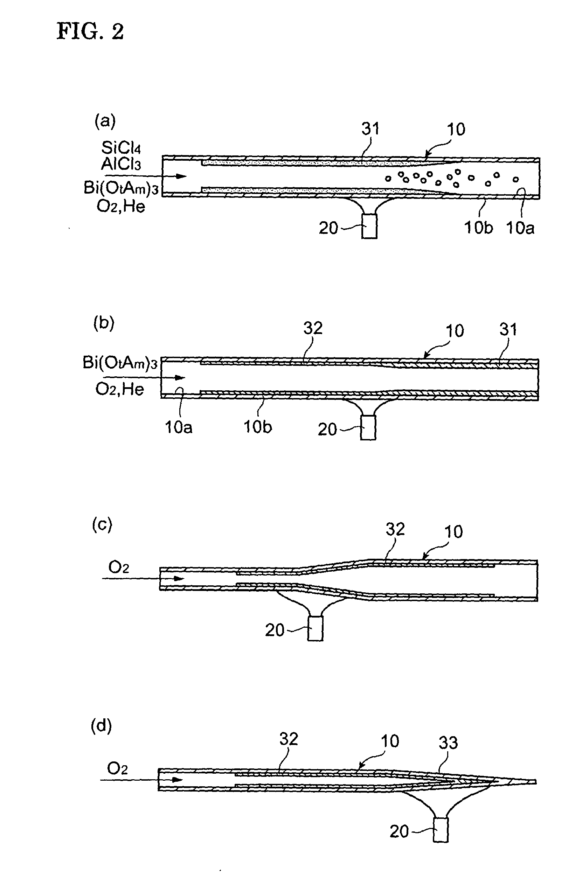

Figures 2(a) to 2(d) are drawings describing each of the steps of the flowchart shown in Fig. 1, wherein each of the figures shows a cross-sectional view of a glass pipe cut along the central axis at each of the steps, respectively.

At a depositing step S1 shown in Fig. 2(a), a glass pipe 10 is heated using an oxyhydrogen burner 20 as a heat source while a mixture gas including silicon tetrachloride (SiCl₄), aluminum chloride (AlCl₃), tri-tert-amyloxybismuth (Bi(OtAm)₃, oxygen (O₂), helium (He), and the like is being supplied into the glass pipe 10 as a material gas. Under these conditions, silica glass micro-particles are deposited on an inner wall 10a of the glass pipe 10 and a glass micro-particle layer 31 including bismuth (100 wppm to 1 w%) and aluminum (1 w% to 15 w%) is formed. The glass pipe 10 is to be a cladding region (or a part of a cladding region) and is composed of a fluorine-doped silica glass or a pure silica glass without fluorine. The glass micro-particle layer 31 is to be a core region. The moving speed (traverse speed) of the oxyhydrogen burner 20 in the longitudinal direction along the glass pipe 10 is, for example, 60 mm/min. The oxyhydrogen burner 20 heats the glass pipe 10 so that the temperature of the outer surface 10b of the glass pipe 10 is kept at about 1100°C.

At the consolidation step S2 shown in Fig. 2(b), the glass pipe 10 is heated using the oxyhydrogen burner 20 while a mixture gas including Bi(OtAm)₃, oxygen, and helium is being supplied into the glass pipe 10. Under these conditions, the glass micro-particle layer 31 is consolidated into a glass layer 32. The moving speed of the oxyhydrogen burner 20 in the longitudinal direction along the glass pipe 10 is, for example, about 60 mm/min. The oxyhydrogen burner 20 heats the glass pipe 10 such that the temperature of the glass pipe 10 is increased step by step, for example from 600°C to a maximum of about 1400°C.

The diameter-reducing step S3 is performed after each of the depositing step S1 and the consolidation step S2 is performed once more. At the diameter-reducing step S3 shown in Fig. 2 (c), the glass pipe 10 having the glass layer 32 is reduced in diameter by heating using the oxyhydrogen burner 20 while oxygen is being supplied into the glass pipe 10. The moving speed of the oxyhydrogen burner 20 in the longitudinal direction along the glass pipe 10 is, for example, about 20 mm/min. At the diameter-reducing step S3, it is preferable that the glass pipe 10 is heated while a mixture gas including Bi(OtAm)₃, oxygen, and helium is being supplied into the glass pipe 10. Under these conditions, the vapor pressure of the bismuth in the glass pipe 10 can be kept at a high level, and thus the bismuth in the glass layer 32 can be inhibited from being evaporated.

At the collapsing step S4 shown in Fig. 2(d), the glass pipe 10 is heated using the oxyhydrogen burner 20 while oxygen is being supplied into the glass pipe 10 having been reduced in diameter, so that the glass pipe 10 is collapsed to be a glass body 33. The moving speed of the oxyhydrogen burner 20 in the longitudinal direction along the glass pipe 10 is, for example, 5 mm/min. The glass body 33 serves as the optical fiber preform.

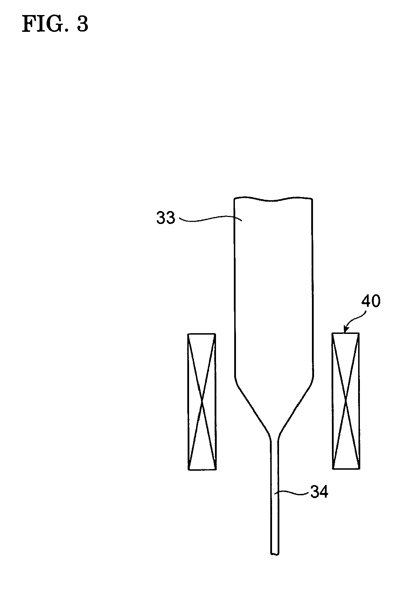

Figure 3 is a schematic view illustrating a drawing step for forming an optical fiber from the glass body. An optical fiber 34 is obtained by drawing the glass body 33, as an optical fiber preform, set in a drawing furnace 40.

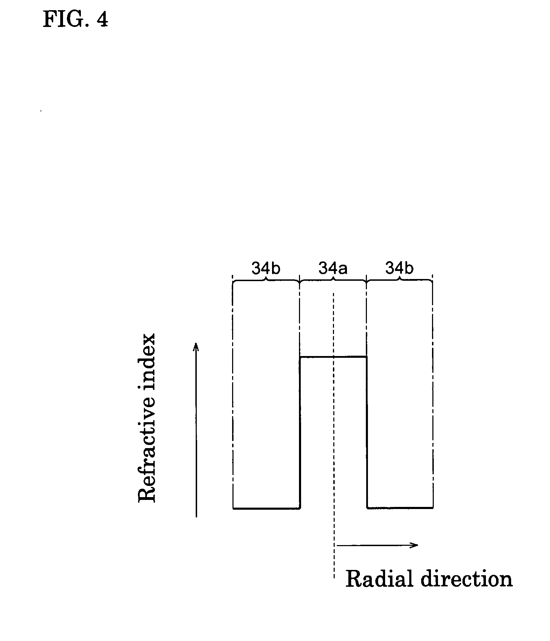

Figure 4 is a refractive index profile of the optical fiber 34. Since the glass micro-particle layer 31 formed at the depositing step S1 constitutes a core region 34a of the optical fiber 34, the core region 34a contains bismuth oxide (Bi₂O₃) and aluminum oxide (Al₂O₃). The refractive index of the core region 34a is higher than that of the cladding region 34b so as to propagate light within the core region 34a. Furthermore, since a silica glass containing bismuth has a broad fluorescence spectrum extending to the long-wavelength side with a peak wavelength at 1250 nm, the optical fiber 34 can be suitably used as an amplification optical fiber for 1300 nm wavelength band in wavelength division multiplexing transmission.

According to the existing method for manufacturing a metal-element-doped optical fiber, if the metal element is bismuth having high volatility, bismuth evaporates when the glass micro-particle layer containing bismuth is consolidated. As a result, it is difficult to manufacture a fiber preform or an optical fiber having a desired amount of bismuth.

On the contrary, according to the method for manufacturing a glass body of the embodiment, since the glass micro-particle layer 31 is formed while a gaseous organobismuth compound, Bi(OtAm)₃ is being supplied into the glass pipe 10 at the depositing step S1, the formed glass micro-particle layer 31 includes bismuth. Therefore, when the glass pipe 10 is heated at the consolidation step S2 at a temperature higher than the temperature at the depositing step S1, the bismuth contained in the glass micro-particle layer 31 is not easily evaporated. Furthermore, at the consolidation step S2, the vapor pressure of the bismuth in the glass pipe 10 is kept at a high level by supplying the Bi(OtAm)₃ gas into the glass pipe 10. Therefore, the evaporation of bismuth in the glass micro-particle layer 31 (or glass layer 32) can be suppressed resulting in the formation of a glass body 33 and optical fiber 34 containing a desired amount of bismuth. Furthermore, in the method for manufacturing a glass body of the embodiment, since the glass body is formed according to the MCVD method, a contamination by impurities causing a background loss of an optical fiber is suppressed. As a result, the glass body can be suitably used for producing a low background loss optical fiber.

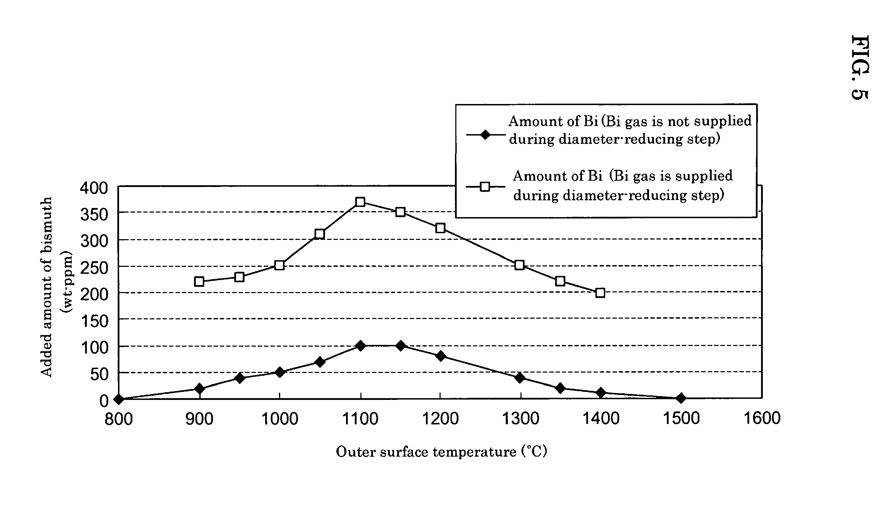

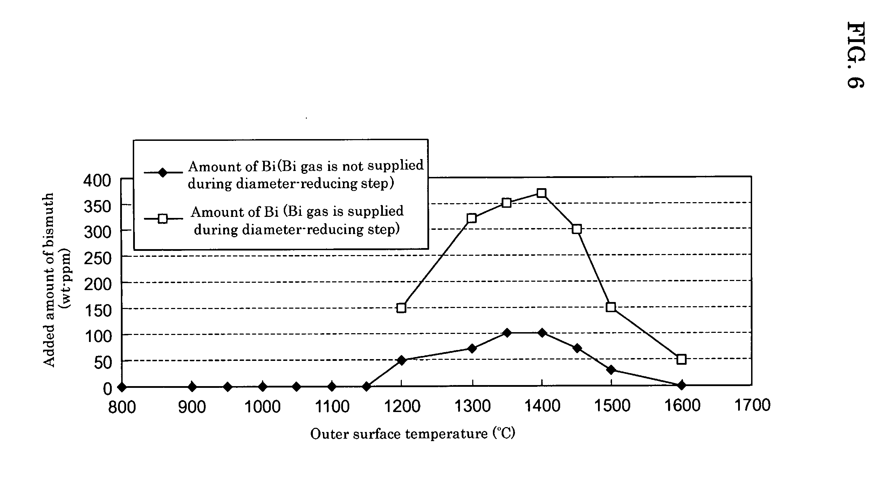

By using the method for manufacturing the glass body of the embodiment, a glass body 33 containing bismuth can be manufactured. This is described more specifically with reference to Figs. 5 and 6. Figure 5 is a graph showing an example of relationships between the amount of bismuth contained in a glass body 33 and a temperature of a glass pipe 10 at depositing step S1. More specifically, Fig. 5 shows the amount of bismuth at a corresponding temperature with a mark "◆", wherein the bismuth is contained in each glass body 33 which has been manufactured in a manner where the temperature of the glass pipe 10 has been varied in the range between 800°C and 1500°C by 100°C or 50°C. An abscissa is the temperature of the glass pipe 10 and an ordinate is the added amount of bismuth. At the consolidation step S2 in the manufacturing process of the glass body 33, the highest temperature of the glass pipe 10 was about 1400°C.

In the case where bismuth is not supplied in diameter-reducing step S3, bismuth can be contained when the glass pipe 10 is heated at the temperature of about 900°C to 1400°C, particularly about 1100°C. Generally, when the temperature is low (for example, 900°C or lower in Fig. 5), a glass micro-particle layer 31 cannot be formed easily, while when the temperature is high, bismuth cannot be added easily. Therefore, in the above-mentioned temperature range at the depositing step S1, the temperature of the glass pipe 10 may preferably be about 950°C to 1300°C, more preferably, about 1100°C.

Furthermore, the amount of bismuth contained in the glass body 33, which is manufactured in a manner where bismuth is being supplied into the glass pipe 10 in the diameter-reducing step S3, is plotted with a mark "□" on the graph shown in Fig. 5. Since bismuth was supplied at the diameter-reducing step S3, the amount of bismuth contained in the glass body 33 was further increased.

Figure 6 is a graph showing an example of relationships between the amount of bismuth contained in the glass body 33 and the temperature of the glass pipe 10 at consolidation step S2. More specifically, Fig. 6 shows the amount of bismuth at a corresponding temperature with a mark "◆", wherein the bismuth is contained in each glass body 33 which has been manufactured in a manner where the temperature of the glass pipe 10 has bee varied in the range between 800°C and 1600°C by 100°C or 50°C. An abscissa is the temperature of the glass pipe 10 and an ordinate is the added amount of bismuth. As mentioned above, the temperature of the glass pipe 10 is increased step-by-step in the consolidation step S2. Note that the temperature of the glass pipe 10 at the consolidation step S2 means the highest temperature in a profile of the temperature in which the temperature increases step-by-step. At the depositing step S1 for manufacturing the glass body 33, the temperature of the glass pipe 10 was about 1100°C.

In the case where bismuth is not supplied in diameter-reducing step S3, bismuth can be certainly contained when the temperature was about 1200°C to about 1500°C, particularly about 1400°C. If the temperature is lower than 1250°C, consolidation may not be sufficiently performed. If the temperature is high, a possibility of evaporation of bismuth is high. At the consolidation step S2, the temperature of the glass pipe 10 is preferably about 1250°C to about 1400°C, more preferably about 1400°C. In the above-mentioned method, the temperature of the glass pipe is set at from 900°C or higher to 1300°C or lower in the depositing step, and set at from 1250°C or higher to 1500°C or lower in the consolidation step, so that the glass layer containing bismuth is formed more certainly.

Furthermore, the amount of bismuth contained in the glass body 33, which is manufactured while bismuth is being supplied into the glass pipe 10 in the diameter-reducing step S3, is measured and the measured value is plotted with a mark "□" on the graph shown in Fig. 6. Since bismuth was supplied at the diameter-reducing step S3, the amount of bismuth contained in the glass body 33 was further increased.

According to Figs. 5 and 6, it is understandable that the glass body 33 containing bismuth is certainly manufactured using the method for manufacturing the glass body of the embodiment. Bismuth contained in the glass layer may evaporate by heating of the glass pipe in the diameter-reducing step S3. However, since the diameter-reducing is performed while bismuth is being supplied, the evaporation of bismuth from the glass layer is suppressed and the glass body 33 having larger amount of bismuth can be manufactured.

The preferable embodiment of the present invention has been described, but the invention is not limited by the above-mentioned embodiment. In the embodiment, while the glass micro-particle layer 31 that is to be a core region, is formed on the inner wall 10a of the glass pipe 10, the glass micro-particle layer that is to be a core region may be formed after the formation of a glass micro-particle layer, which is to be a cladding region on the inner wall 10a. In this case, the glass pipe 10 acts as a part of the cladding region or a jacket. The glass body 33 was used as an optical fiber preform, however, the glass body 33 may be used as an intermediate optical fiber preform.

In the above-mentioned embodiment, aluminum oxide (Al₂O₃) is used as an example of a refractive-index adjustor added to the glass micro-particle layer 31 (core region 34a). The examples of the refractive-index adjustor may include germanium oxide, phosphorus oxide, chlorine, and fluorine. Further, in the above-mentioned embodiment, although the depositing step S1 and the consolidation step S2 are repeated two times, each step may be performed once, or may be performed three times or more.

### EXAMPLES

A method for manufacturing a glass body and a method for manufacturing an optical fiber of the present invention are described more specifically with reference to EXAMPLE 1, EXAMPLE 2, and COMPARATIVE EXAMPLE. Note that the present invention is not limited to the EXAMPLE 1 and EXAMPLE 2.

Example 1 is described as follows. At depositing step S1, a glass micro-particle layer 31 was formed by heating a glass pipe 10 with an oxyhydrogen burner 20 while a mixture gas including AlCl₃, Bi(OtAm)₃, oxygen, and helium is being supplied into the glass pipe 10. The outer diameter of the glass pipe 10 is 25 mm, and the inner diameter of the glass pipe 10 is 16 mmφ. A supply rate of Bi(OtAm)₃ was 0.018 standard cubic centimeter (sccm) and the supply rate of a helium carrier gas was 45 sccm in the depositing step S1. The temperature of the glass pipe 10 was kept at about 1100°C using the oxyhydrogen burner 20. The moving speed of the oxyhydrogen burner 20 was about 60 mm/min.

In the consolidation step S2, the glass micro-particle layer 31 was consolidated into the glass layer 32 by heating the glass pipe 10 to a temperature of 600°C to 1400°C, in which the temperature was increased step by step, using the oxyhydrogen burner 20 while the gases including Bi(OtAm)₃, helium, and oxygen were being supplied into the glass pipe 10. The supply rate of a Bi(OtAm)₃ gas was 0.018 sccm and the supply rate of a helium carrier gas was 45 sccm. The moving speed of the oxyhydrogen burner 20 was about 60 mm/min.

The depositing step S1 and the consolidation step S2 were performed once again, and then, the glass pipe 10 was reduced in diameter in the diameter-reducing step S3. At this step, oxygen was being supplied into the glass pipe 10. At the diameter-reducing step S3, the moving speed of the oxyhydrogen burner 20 was about 20 mm/min and the temperature of the glass pipe 10 was from 1600 to 1800°C.

At a collapsing step S4, the glass pipe 10 was collapsed by heating the glass pipe 10 to 1700°C using the oxyhydrogen burner 20 while oxygen was being supplied into the glass pipe 10 that has already been reduced in diameter. The moving speed of the oxyhydrogen burner 20 was 5 mm/min. The concentration of Al contained in the glass body (optical fiber preform) 33, which was obtained by collapsing, was about 3.8 wt% and the concentration of bismuth was about 100 wt-ppm. This means that bismuth was certainly contained in the glass body 33.

EXAMPLE 2 is described as follows. In EXAMPLE 2, the glass body 33 was manufactured in a same manner as EXAMPLE 1 except that the glass pipe 10 was reduced in diameter while a Bi(OtAm)₃ gas was being supplied into the glass pipe 10 at the diameter-reducing step S3. In the diameter-reducing step S3, the supply rate of a Bi(OtAm)₃ gas was 0.018 sccm and a supply rate of a helium carrier gas was 45 sccm. The concentration of Al contained in the resulting glass body 33 is about 4.2 wt% and the concentration of bismuth is about 370 wt·ppm.

Furthermore, in EXAMPLE 2, an optical fiber 34 was formed by drawing the glass body 33, as an optical fiber preform, using a drawing furnace 40. At this step, the drawing speed was 50 m/min and the temperature in the furnace was 1750°C. A background loss of an optical fiber 34 was measured using a cutback method.

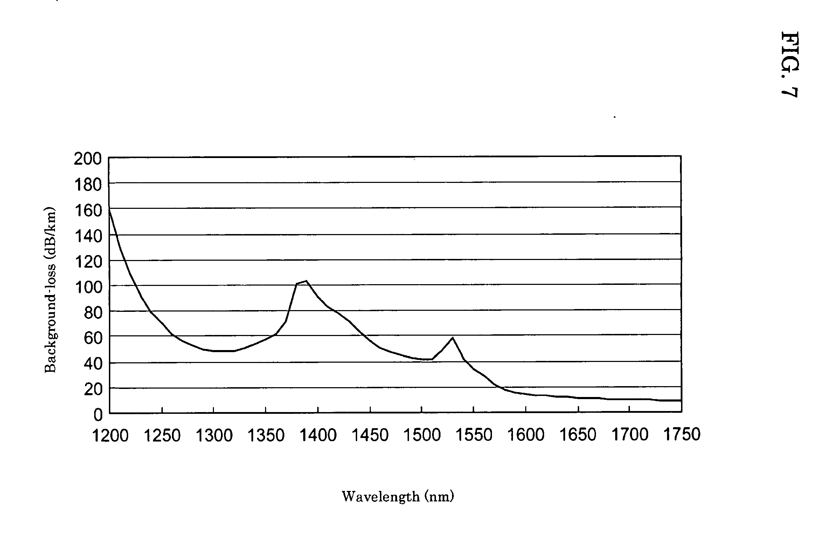

Figure 7 is a graph showing a wavelength dependence of a background loss of the optical fiber 34. As shown in Fig. 7, the background loss at around 1300 nm in wavelength was about 48.4 dB/km, and at around 1550 nm, it was about 34.6 dB/km. That is, an optical fiber having a low background loss and being satisfactorily usable as the amplification optical fiber could be manufactured using the method for manufacturing the glass body shown in Fig. 1.

COMPARATIVE EXAMPLE is described as follows. That is, the glass body was manufactured in a same manner as EXAMPLE 1 except that the Bi(OtAm)₃ gas was not being supplied at the consolidation step S2 and that the temperature of the glass pipe 10 was about 1550°C at the consolidation step S2. Although a concentration of Al contained in a core region of the glass body manufactured in this manner was about 4.5 wt%, bismuth was hardly contained in the region.

A comparison between EXAMPLE 1 and COMPARATIVE EXAMPLE shows that bismuth can be more certainly contained by dehydration and consolidation of the glass micro-particle layer 31 while a Bi(OtAm)₃ gas is being supplied at the consolidation step S2. The comparison between EXAMPLE 1 and EXAMPLE 2 shows that a larger amount of bismuth can be contained by diameter-reducing the glass pipe 10 while a Bi(OtAm)₃ gas is being supplied into the glass pipe 10.

This application claims the benefit of Japanese Patent Application No. 2005-253893 filed September 1, 2005, which is hereby incorporated by reference herein in its entirety.

### Industrial Applicability

According to the method for manufacturing a glass body and the method for manufacturing an optical fiber of the present invention, an optical fiber that is usable as an amplification optical fiber used for a 1300 nm waveband application can be obtained.

## Claims

1. A method for manufacturing a glass body comprising the steps of:
depositing a glass micro-particle layer on an inner wall of a glass pipe;
consolidating the glass micro-particle layer to form a glass layer;
reducing a diameter of the glass pipe having the glass layer on the inner wall of the glass pipe; and
collapsing the glass pipe having been reduced in diameter at the diameter-reducing step so as to form the glass body,
wherein at the depositing step, the glass micro-particle layer is formed while an organobismuth compound is being supplied into the glass pipe and at the consolidating step, the glass layer is consolidated while an organobismuth compound is being supplied into the glass pipe.

2. A method for manufacturing a glass body according to claim 1, wherein
at the depositing step, the glass pipe is heated in a temperature range between 900°C and 1300°C, while at the consolidation step, the glass pipe is heated in a temperature range between 1250°C and 1500°C.

3. A method for manufacturing a glass body according to claim 1, wherein
at the diameter-reducing step, reducing of the diameter is performed while the organobismuth compound is being supplied into the glass pipe.

4. A method for manufacturing a glass body according to claim 1, wherein
the organobismuth compound is tri-tert-amyloxybismuth (Bi(OtAm)₃).

5. A method for manufacturing a glass body according to claim 1, wherein
the glass body is an optical fiber preform or an intermediate of the optical fiber preform, both having silica glass as a host material.

6. A method for manufacturing an optical fiber comprising the steps of
depositing a glass micro-particle layer on an inner wall of a glass pipe;
consolidating the glass micro-particle layer to form a glass layer;
reducing of a diameter the glass pipe having the glass layer on the inner wall of the glass pipe;
collapsing the glass pipe having been reduced in diameter at the diameter-reducing step so as to form a glass body; and
drawing the glass body,
wherein at the depositing step, the glass micro-particle layer is formed while an organobismuth compound is being supplied into the glass pipe and at the consolidating step, the glass layer is consolidated while an organobismuth compound is being supplied into the glass pipe.
